Europäisches Patentamt

European Patent Office

Office européen des brevets

(19)

(11) Veröffentlichungsnummer: **0 144 061**
**B1**

(12) # EUROPÄISCHE PATENTSCHRIFT

(45) Veröffentlichungstag der Patentschrift:
08.06.88

(51) Int. Cl.⁴: **B 65 H 29/16**

(21) Anmeldenummer: **84114361.3**

(22) Anmeldetag: **28.11.84**

(54) **Vorrichtung zum fördern von geschnittenen Metallteilen.**

(30) Priorität: **28.11.83 US 555780**

(43) Veröffentlichungstag der Anmeldung:
**12.06.85 Patentblatt 85/24**

(45) Bekanntmachung des Hinweises auf die Patenterteilung:
**08.06.88 Patentblatt 88/23**

(84) Benannte Vertragsstaaten:
**AT CH DE FR GB LI**

(56) Entgegenhaltungen:
**DE-A-2 209 663**
**DE-A-2 412 015**
**DE-A-3 303 332**
**FR-A-2 512 361**
**US-A-2 366 443**

(73) Patentinhaber: **DEERE & COMPANY, 1 John Deere Road, Moline Illinois 61265 (US)**

(72) Erfinder: **Boardman, Peter William, 538 Vine Street, St. Catharines Ontario L2M 3T8 (CA)**

(74) Vertreter: **Feldmann, Bernhard, DEERE & COMPANY European Office, Patent Department Steubenstrasse 36- 42 Postfach 503, D-6800 Mannheim 1 (DE)**

## Beschreibung

Die Erfindung bezieht sich auf eine Vorrichtung zum Fördern von geschnittenen Metallteilen mit zahlreichen nebeneinander angeordneten, über eine Welle antreibbaren Förderelementen, die aus je einem Rahmen mit drehbar gelagerten Rollen zur Aufnahme je eines Förderbandes gebildet sind, wobei die Rahmen über Verbindungselemente mit einem Hauptförderrahmen verbunden sind und zwischen den jeweils nebeneinander liegenden Förderelementen je zwei mit Abstand zueinander angeordnete Arme zur Aufnahme von Trägern parallelogrammartig angeschlossen sind, die ihrerseits an je eine Gelenkhalterung angeschlossen sind und über je einen Hydraulikzylinder in verschiedene Höhenlagen verschwenkbar sind. Eine derartige Vorrichtung ist aus der FR-A-2 512 361 bekannt.

Es ist eine Stapelvorrichtung als Zusatzgerät für Bearbeitungsmaschinen, insbesondere Blechscheren, bekannt (DE-A-2 209 663), die im Anfangsbereich einer Transporteinheit eine Hochhaltevorrichtung aufweist, die mit einem Querbalken in Form eines Vierkantrohres ausgerüstet ist. Der Querbalken ist an seinen Enden an Führungssäulen gelagert und wird durch einen Druckmittelzylinder betätigt, was nach jedem Schritt von der Schere aus selbsttätig gesteuert werden kann.

Ferner ist bereits eine Vorrichtung zum Fördern von Metallteilen bekannt (US-A-3 760 668), die aus zahlreichen nebeneinander angeordneten Förderbändern gebildet ist, die über einzelne Rollen geleitet sind. Die einzelnen Rollen der Förderbänder sind auf zwei mit Abstand zueinander angeordneten, durchgehend ausgebildeten Antriebswellen angeordnet, die in einem Hauptrahmen drehbar gelagert sind. Der Hauptrahmen stützt sich auf mit Druckluft beaufschlagbaren Abstützelementen ab. Der von einer Schervorrichtung abgeschnittene Metallteil fällt auf die entsprechenden Förderbänder und wird über diese zu einer Ablegestelle transportiert. Bei Aufkommen der einzelnen Metallteile auf die Oberfläche der einzelnen Förderbänder können, da keine Schutzmaßnahmen vorgesehen sind, leicht Beschädigungen auftreten. Wird beispielsweise durch den Metallteil ein einzelnes Förderband beschädigt, so ist das Auswechseln des Förderbandes sehr aufwendig, insbesondere dann, wenn das Förderband durchgehend ausgebildet ist und seitlich von den Rollen abgenommen werden soll.

Der Erfindung liegt gegenüber der Vorrichtung der eingangs genannten Art die Aufgabe zugrunde, die einzelnen Förderelemente der Fördervorrichtung derart auszubilden und anzuordnen, daß die von der Trennvorrichtung abgeschnittenen Metallteile auf einfache Weise über einen großen vertikalen Abstand zur Fördervorrichtung auf diese abgegeben werden können. Diese Aufgabe ist dadurch gelöst worden, daß zwischen den einzelnen Förderelementen weitere höhenverstellbare Tragelemente vorgesehen sind, die zur Aufnahme der Metallteile, bevor sie geschnitten sind, dienen, wobei die in Förderrichtung des Materials hintereinander liegenden Tragelemente mit ihren oberen Enden über flexible Verbindungselemente verbunden sind, und daß zum Ausgleich der Abstandsveränderung der gegenüberliegenden Teleskopstangen eine Vorrichtung zur Spannung der Verbindungselemente vorgesehen ist. Die Tragelemente lassen sich auf einfache Weise so weit anheben, daß sie mit ihrer Oberfläche auf der Höhe der Scherleiste der Schneidvorrichtung liegen, so daß sie auch gleichzeitig zur Abstützung des in der Scherleiste aufgenommenen Materials dienen. Das flexible Verbindungselement zwischen den Tragelementen verhindert, daß sich zwischen den oberen Förderelementen beispielsweise dünne Metallteile nach unten zwischen die einzelnen Förderbänder bewegen bzw. auf diese herunterfallen. Nach dem Abschervorgang können die einzelnen Tragelemente wieder abgesenkt werden und dann die Materialteile ohne weiteres auf die darunter gelegenen Förderbänder abgegeben werden. Durch die höhenverstellbaren Arme, die an dem parallelogrammartig angeordneten Lenker angeordnet sind, wird verhindert, daß die scharfen Kanten der Metallteile die Förderbänder beschädigen. Vorteilhaft ist es, daß das über die Rollen geführte Förderband eine nach oben zeigende Förderfläche bildet, die unterhalb der Schneidvorrichtung verläuft. Da die Oberflächen der einzelnen Förderbänder stets unterhalb der Schneidkante der Schneidvorrichtung verlaufen, läßt sich der Metallteil ohne weiteres von oben her auf die einzelnen Förderbänder ablegen.

In weiterer Ausgestaltung der Erfindung ist es vorteilhaft, daß am Ende der Förderelemente eine Fördervorrichtung vorgesehen ist, die das abgeschnittene Material quer zur Förderrichtung des Materials auf den Förderelementen bewegt.

Um die notwendige Zugspannung in den einzelnen Förderbändern aufrechtzuerhalten, ist es vorteilhaft, daß den einzelnen Förderbändern jeweils eine Spannvorrichtung zugeordnet ist, die aus zwei in einer schwenkbaren, gegen die Wirkung einer Feder verstellbaren Halterung drehbar aufgenommenen Spannrollen gebildet ist, wobei der untere Trum des Förderbandes einmal oberhalb einer Spannrolle und einmal unterhalb einer Spannrolle geführt ist.

Um ein Auswechseln der einzelnen Förderbänder ohne Ausbau der einzelnen Wellenteile zu erleichtern, ist es vorteilhaft, daß die einzelnen die Welle bildenden Wellenteile stirnseitig mit Abstand zueinander angeordnet sind und zum Auswechseln des Förderbandes einen Zwischenraum bilden. Das Auswechseln der einzelnen Förderbänder wird dadurch ermöglicht, daß das Wellenende jeweils mit dem benachbarten Wellenende über das auf der Welle verschiebbare Kupplungselement antriebsverbindbar ist. Um die einzelnen Wellenteile gemeinsam anzutreiben und über die entsprechenden Kupplungselemente miteinander zu verbinden, ist es vorteilhaft, daß die Achsen der einzelnen Rollen bzw. Riemenscheiben zur Aufnahme des Förderbandes jeweils endseitig freitragend gelagert sind. Da die einzelnen Rollen bzw. Riemenscheiben freitragend gelagert sind, lassen sich die Förderbänder seitlich ohne weiteres von den Rollen abnehmen.

Eine einwandfreie Führung der einzelnen Förderbänder auf den Rollen bzw. Riemenscheiben wird dadurch gewährleistet, daß diese zur Aufnahme des Förderbandes ballig ausgebildet sind und zumindest eine Riemenscheibe stirnseitig mit einem Kragen versehen ist. Damit der Abrieb der einzelnen Förderbänder bei Aufgabe der Metallteile auf die Oberfläche der Förderbänder klein gehalten wird, ist es vorteilhaft, daß der Antriebsmotor zum Antrieb der Welle als stufenlos einstellbarer Motor ausgebildet ist.

Nach einem weiteren Merkmal der Erfindung ist es vorteilhaft, daß der Hauptförderrahmen zwei mit Abstand zueinander angeordnete, quer zu den Förderelementen verlaufende Träger aufweist und die einzelnen Förderelemente über Winkelhalterungen und Schraubenbolzen an die auf dem Träger vorgesehenen Winkelträger lösbar angeschlossen sind. Durch die Verwendung eines Hauptförderrahmens lassen sich alle Förderelemente ohne weiteres zu einer gemeinsamen Fördervorrichtung zusammenfassen, wobei die vorteilhafte Ausbildung der einzelnen Winkelhalterungen es gestattet, einzelne Förderelemente unabhängig von den anderen Förderelementen auszutauschen. Ein einfaches Ausrichten der relativ großen Metallteile läßt sich dadurch erreichen, daß zwischen den einzelnen Förderelementen ein- und ausfahrbare Teleskopstangen vorgesehen sind, die die einzelnen Metallteile zur Schneidvorrichtung ausrichten.

Vorteilhaft ist es ferner, daß die einzelnen Tragelemente lösbar mit dem Hauptförderrahmen verbunden sind. Hierdurch läßt sich jeweils ein einziges Tragelement unabhängig von den übrigen Tragelementen gegen ein neues Tragelement austauschen.

In weiterer Ausgestaltung der Erfindung ist es vorteilhaft, daß die zwischen den einzelnen Förderelementen vorgesehenen Tragelemente über Hydraulikzylinder vertikal verstellbar sind und die oberen Enden der Tragelemente in etwa auf die gleiche Ebene wie die Scherebene der Schneidvorrichtung verstellbar sind. Die Verwendung von Teleskopstangen, ermöglicht die Überwindung eines großen vertikalen Abstandes zwischen der Scherleiste und der Oberfläche der Fördervorrichtung, so daß nach Abtrennen des Metallteiles von dem übrigen Metallteil der abgetrennte Metallteil ohne weiteres gleichmäßig auf die Oberfläche der Tragelemente und dann auf die Oberfläche der einzelnen Förderbänder abgelegt werden kann. Hierdurch wird eine Beschädigung der Förderbänder vermieden und gewährleistet, daß die Metallteile nur allmählich Kontakt mit der Oberfläche der einzelnen Förderelemente erhalten. Die Parallelverstellung der Tragelemente stellt ferner sicher, daß keine scharfkantigen Teile die Oberfläche der Förderbänder berühren. Hierzu ist es ferner vorteilhaft, daß an den oberen Enden der Teleskopstangen Kugellagerteile zur verschiebbaren Aufnahme der Metallteile vorgesehen sind. Die Verwendung eines Zugseiles zwischen den einzelnen Teleskopstangen verhindert, daß der Metallteil zwischen den Teleskopstangen herunterfällt. Bei einer Höhenveränderung der Teleskopstangen oder einer Horizontalverstellung einer einzelnen Teleskopstange wird das Zugseil über die Stellvorrichtung stets auf die notwendige Zugspannung gebracht, so daß das Zugseil stets in der Lage ist, den auf die Teleskopstangen abgegebenen Metallteil aufzunehmen, wenn er nicht genau zu den Teleskopstangen ausgerichtet ist. Hierzu ist es vorteilhaft, daß zumindest eine Teleskopstange zur Aufnahme des Zugseiles mit einer Rolle ausgerüstet ist, um die das Zugseil geführt ist, dessen unteres Ende über eine zweite Rolle geführt und an eine am Querträger vorgesehene Halterung angeschlossen ist, wobei bei einer Abstandsveränderung oder eine Höhenverstellung der Teleskopstangen das Zugseil über die das Gewicht tragende Vorrichtung stets auf die notwendige Zugspannung zur Aufnahme von Metallteilen gehalten wird. Außerdem ist es vorteilhaft, daß die an den Querträger angeschlossene Teleskopstange über einen Hydraulikzylinder horizontal verstellbar ist, der einenends mit dem Hauptförderrahmen, anderenends mit der Teleskopstange verbunden ist, daß das Gewicht zur ständigen Spannung des Zugseiles mittels des Hydraulikzylinders verstellbar ist und daß das Gewicht aus zwei gegenüberliegenden Führungsplatten gebildet ist, die die Rolle zwischen sich aufnehmen und um die das Zugseil geführt ist, wobei das eine Ende des Zugseiles über die Halterung an den Querträger angeschlossen ist. Vorteilhaft ist es außerdem, daß der Querträger zur Aufnahme der horizontal verstellbaren Teleskopstange und des zugehörigen Hydraulikzylinders auf einer Hülse befestigt ist, die mittels des Hydraulikzylinders auf einer Gleitschiene verschiebbar ist. Ferner ist es vorteilhaft, daß im Bereich der Schneidvorrichtung und am vorderen Ende der Fördervorrichtung ein über einen ersten Hydraulikzylinder höhenverstellbarer und über einen zweiten Hydraulikzylinder horizontal verstellbarer Magnetkopf zur Aufnahme und Weiterbewegung der Metallteile quer zur Bewegungsrichtung der Förderelemente am Hauptförderrahmen angeordnet ist. Die Horizontalverstellung der Teleskopstange gestattet es, unterschiedlich breite Metallteile ohne weiteres abzustützen. Die Verwendung eines horizontal und vertikal verstellbaren Magnetkopfes hinter der Schneidvorrichtung gestattet es, beispielsweise relativ schmale Metallteile quer zu der Bewegungsrichtung der Förderbänder zu transportieren und diese dann einer Wickelvorrichtung zuzuführen, so daß die Metallteile, die zur Abfallverwertung vorgesehen sind, aufgewickelt und somit auf relativ kleinem Raum untergebracht werden können.

Im folgenden wird die Erfindung anhand von lediglich einen Ausführungsweg darstellenden Zeichnungen näher erläutert.

Es zeigt:

Fig. 1 eine Fördervorrichtung für abgetrennte Metallplatten bzw. -bänder,

Fig. 2 eine Draufsicht eines Teils des Fördersystems gemäß Fig. 1, wobei im einzelnen die Riemenförderelemente sowie zugehörige Tragelemente dargestellt sind,

Fig. 3 eine Darstellung der Anschlagträger für die zugehörige Fördervorrichtung gemäß Fig. 1 in größerem Maßstab,

Fig. 4 eine Seitenansicht der einstellbaren Tragvorrichtung mit Stellelementen für die zugehörige Fördervorrichtung gemäß Fig. 1,

Fig. 5 eine Endansicht der Anschlagvorrichtung gemäß Fig. 3,

Fig. 6 eine Seitenansicht eines Teils des Förderbandes, der auf dem Hauptförderrahmen angeordnet ist,

Fig. 7 eine Riemenspannvorrichtung des Förderbandes gemäß Fig. 6,

Fig. 8 eine Endansicht einer Antriebsvorrichtung,

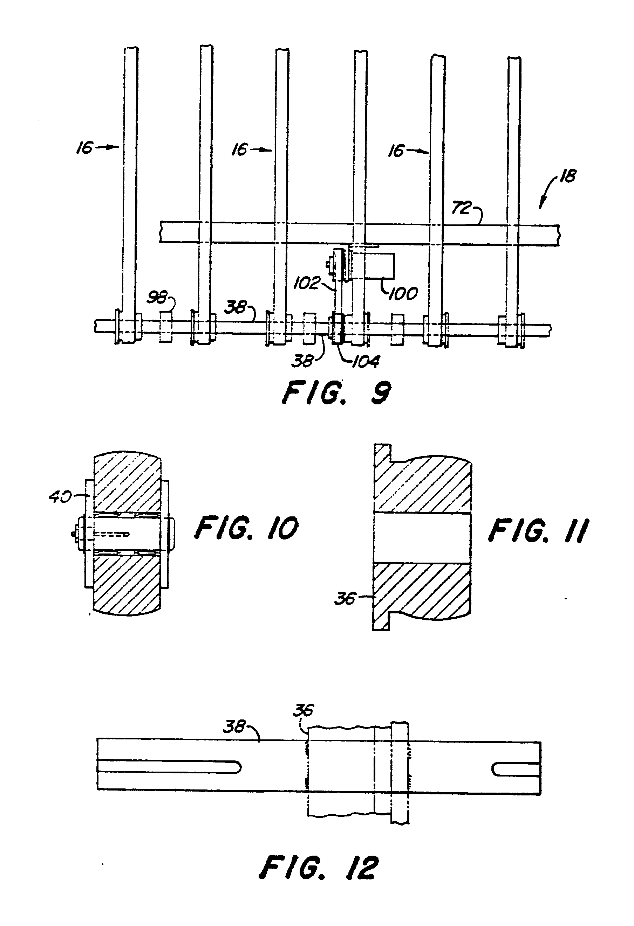

Fig. 9 eine Draufsicht des Förderbandes und eines Antriebselementes,

Fig. 10 eine Schnittdarstellung einer Förderrolle, die im Bereich der Scherseite der Fördervorrichtung angeordnet ist,

Fig. 11 eine Schnittdarstellung einer Förderrolle, die im Bereich des Abgabeendes der Fördervorrichtung vorgesehen ist,

Fig. 12 eine Antriebswelle gemäß Fig. 9, jedoch in größerem Maßstab,

Fig. 13 eine Frontansicht einer Greif- und Fördervorrichtung gemäß Fig. 1,

Fig. 14 eine Endansicht der Greif- und Fördervorrichtung gemäß Fig. 13,

Fig. 15 eine ähnliche Ansicht wie in Fig. 14, wobei die einzelnen Positionen der verstellbaren Greif- und Fördervorrichtung dargestellt sind,

Fig. 16 eine Seitenansicht einer Gleitschiene,

Fig. 17 eine Endansicht gemäß Fig. 16.

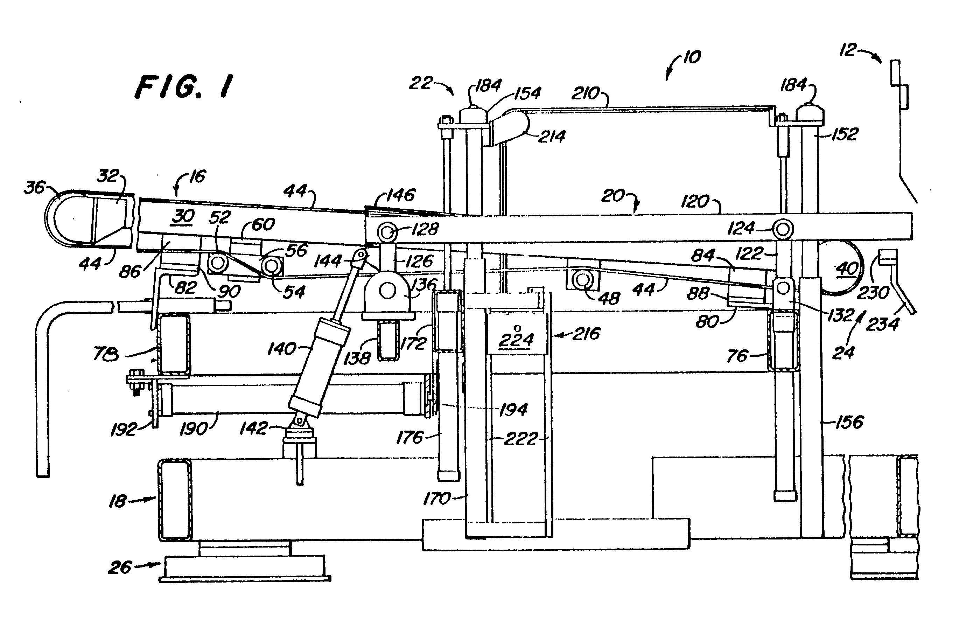

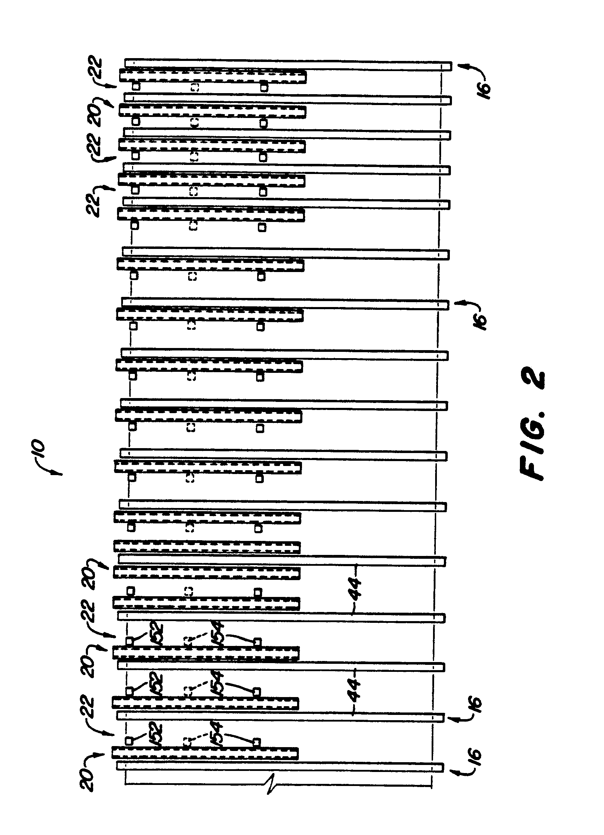

In der Zeichnung ist in Fig. 1 mit 10 eine Fördervorrichtung für eine Schneidvorrichtung 12 dargestellt, die am Ende einer Scherleiste vorgesehen ist. Die Fördervorrichtung 10 weist zahlreiche nebeneinander angeordnete Förderelemente 16 auf, die parallel zueinander verlaufen. Die einzelnen Förderelemente 16 sind in einem Hauptförderrahmen 18 angeordnet, wobei die Achsen der einzelnen Förderelemente 16 in etwa rechtwinklig zur Scherleiste der Schneidvorrichtung 12 verlaufen. Auf dem Hauptförderrahmen 18 sind ferner zwischen den einzelnen Förderelementen 16 zahlreiche Tragelemente 20 vorgesehen, die beispielsweise verstellbar angeordnet sein können und die verhindern, daß abgeschnittene Metallstreifen bzw. Metallplatten direkt auf die Förderelemente 16 fallen (siehe Fig. 2). Die Fördervorrichtung 10 weist ferner vertikal ausfahrbare und einziehbare Führungselemente 22 auf, um das zu schneidende Material entsprechend aufzunehmen und mit Bezug auf die Schneidvorrichtung 12 entsprechend auszurichten. Eine verstellbare Greif- und Fördervorrichtung 24 befindet sich neben der Schneidvorrichtung 12 und kann von der Position gemäß Fig. 1 vertikal in die Nähe der Scherleiste 12 verstellt werden, um das Material aufzunehmen und es in etwa parallel zur Scherleiste der Schneidvorrichtung 12 und von den Förderelementen 16 wegzubewegen. Der Hauptförderrahmen 18, der in etwa eine rechteckförmige Form aufweist, ist an seinen Ecken über pneumatische Abstützelemente 26 aufgenommen, die beispielsweise an einen in der Zeichnung nicht dargestellten Luftkompressor angeschlossen sein können, um, wenn es notwendig sein sollte, die gesamte Fördervorrichtung 10 von der Schneidvorrichtung 12 wegzubewegen. Somit kann das System mittels einer einzigen Bedienungsperson verstellt werden, wenn die Fördervorrichtung 10 auf einem Luftpolster aufliegt.

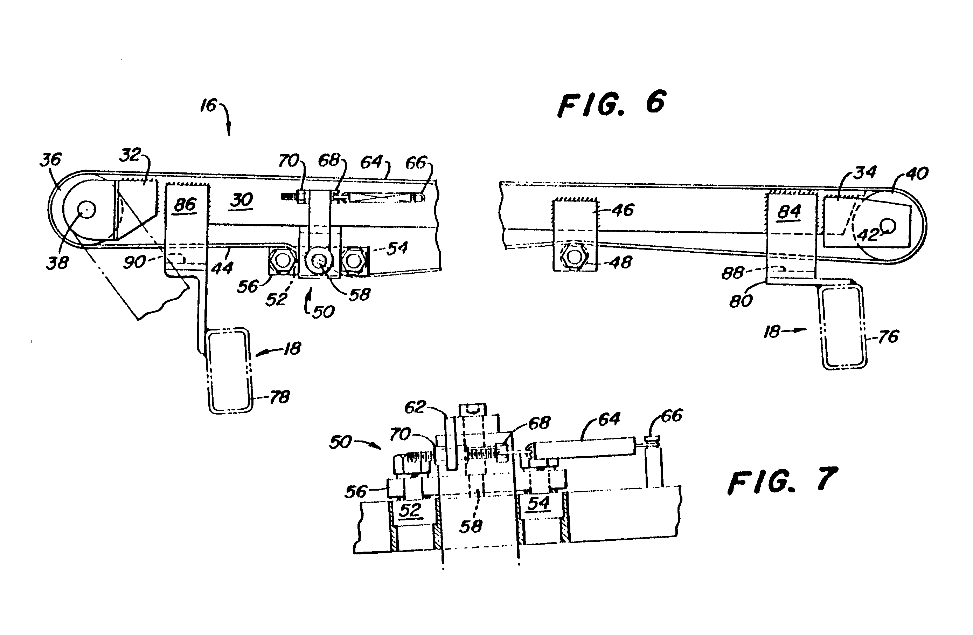

Ein jedes Förderelement 16 weist einen Rahmenteil 30 (Fig. 1 und 6) auf. An der Seite des Rahmens ist eine Halterung 32 angeordnet und befindet sich am Ende gegenüber der Scherleiste der Schneidvorrichtung 12. Das andere Ende des Rahmens 30 weist eine Halterung 34 auf, die ebenfalls an die Seite des Rahmens 30 angeschweißt sein kann. Eine Riemenscheibe 36 lagert auf einer Welle 38, die von der Halterung 32 drehbar aufgenommen ist. Die außenliegende Riemenscheibe 36 gemäß Fig. 6 ist derart freitragend angeordnet, daß ohne weiteres von der Seite her ein Treibriemen aufgebracht werden kann. Eine Spannrolle 40 ist auf einer Welle 42 angeordnet, die parallel zur Achse der Welle 38 verläuft und die in der Halterung 34 drehbar aufgenommen ist. Die Spannrolle 40 ist ebenfalls wie die Riemenscheibe 36 freitragend angeordnet.

Ein relativ schmales endloses Förderband 44 ist um die Riemenscheibe 36 und die Spannrolle 40 geführt. Die Oberseite des Rahmens 30 bildet eine annähernd plane Förderfläche, die aus den einzelnen Förderbändern 44 gebildet ist, die über die Riemenscheiben 36 und die Spannrollen 40 laufen. Eine Platte 46 ist mit Bezug auf Fig. 6 an der außenliegenden Seite des Rahmens 30 angeschlossen und dient zur Aufnahme von Rollen, beispielsweise Spannrollen 48. Das Förderband 44 ist über die Rollen bzw. Spannrollen 48 geführt und wird mittels einer Spannvorrichtung 50, die an dem Rahmen 30 angeordnet ist, gespannt. Die Spannvorrichtung 50 weist zwei mit Abstand zueinander angeordnete Spannrollen 52 und 54 auf, die auf einer Halterung 56 angeordnet sind, die bei 58 in einer Tragvorrichtung 60 schwenkbar gelagert ist. Eine Strebe 62 erstreckt sich von der Stelle, die beispielsweise als Gelenkachse 58 ausgebildet sein kann, nach oben und ist mit der Halterung 56 fest verbunden. Die Strebe 62 ist im Uhrzeigerdrehsinn mittels einer Feder 64 vorgespannt, die sich zwischen einer Anschlußstelle 66 und einem Stellbolzen 68 erstreckt, der mittels Muttern 70, 72 an der Strebe 62 befestigt ist. Das Förderband 44 ist ferner über und unter die Spannrollen 52 und 54 geleitet. Die Feder 64 zieht die Spannrolle 54 nach unten und die Spannrolle 52 nach oben, um somit ein Durchhängen des Förderbandes 44 auszuschalten. Der Förderbandzug kann durch Verstellen der Mutter 70 und 72 sowie des Stellbolzens 68 variiert werden.

Der Hauptförderrahmen 18 weist ferner einen vorderen Träger 76 (siehe Fig. 6) und einen hinteren Träger 78 auf. Eine Tragplatte 80 ist an die Oberseite des Trägen 76 angeschlossen und erstreckt sich von diesem nach hinten zur Aufnahme einer Tragplatte 80, auf der eine Winkelhalterung 84 mittels eines Schenkels 88 angeordnet ist. Der aufrecht stehende Schenkel der Winkelhaltung 84 ist an die Außenseite eines jeden Rahmenteils 30 angeschweißt Neben der vorderen Halterung 84 ist auch eine hintere Halterung 86 vorgesehen, die mit ihrem horizontal verlaufenden Schenkel 90 an einen Winkelträger 82 angeschlossen ist, die wiederum mit dem Träger 78 fest verbunden ist. Ein jedes Förderelement 16 der Fördervorrichtung 10 ist mittels entsprechender in der Zeichnung nicht weiter dargestellter Schraubenbolzen gesichert, die hierzu in in den Schenkeln 88 und 90 der Winkelhalterungen 84, 86 sowie in der Tragplatte 80 und in dem Winkelträger 82 vorgesehene Borhrungen gestreckt sind. Durch Lösen der Befestigungsbolzen und der Welle 38 kann das gesamte Förderelement 16 von dem Hauptförderrahmen 18 abgehoben werden. Die zuvor beschriebene Anordnung zur Aufnahme der einzelnen Förderelemente 16 ermöglicht ferner die einfache Abnahme legiglich eines Förderbandes 44, wenn hierzu die Zugspannung herabgesetzt worden ist, so daß dann das Förderband 44 von den einzelnen Riemenscheiben 36 und den Spannrollen 40 seitlich abgezogen werden kann. Ferner ist es möglich, eine nachfolgend noch beschriebene Kupplung 98 von der Welle 38 lösen, so daß das Förderband 44 vollständig abgezogen werden kann, ohne die Fördereinheit 16 insgesamt ausbauen zu müssen. Wie insbesondere aus Fig. 2 hervorgeht, sind zahlreiche Förderelemente 16 mit gleichem Abstand nebeneinander angeordnet und erstrecken sich über die gesamte Breite des Hauptförderrahmens 18. Die einzelnen Abstände unter den Förderelementen 16 entsprechen in etwa der Breite der einzelnen Förderbänder 44. Wie aus Fig. 1 hervorgeht, sind die einzelnen Förderelemente 16 geneigt verlaufend angeordnet, so daß die Förderoberfläche, die durch die Förderbänder 44 gebildet ist, mit der Standfläche der Maschine einen spitzen Winkel einschließt und von dem Ende an der Schneidvorrichtung 12 ausgehend geringfügig bis du dem Abgabeende ansteigt. Wie aus Fig. 1 ferner hervorgeht, verläuft die schräg verlaufende Förderoberfläche in Richtung der Greif- und Fördervorrichtung 24. Mit Bezug auf Fig. 1 liegt das rechte und der Schneidvorrichtung 12 zugeordnete Ende der Fördervorrichtung 10 bzw. der einzelnen Förderelemente 16 wesentlich unterhalb der Ebene der Scherleiste der Schneidvorrichtung 12.

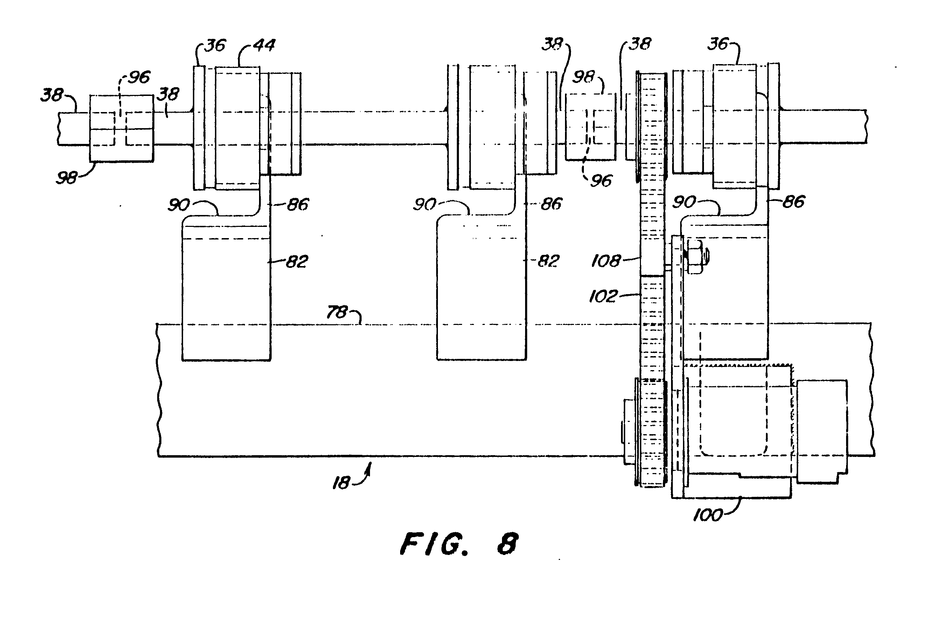

Aus Fig. 8 geht hervor, daß die beiden sich gegenüberliegenden Enden der einzelnen Wellen 38 einen Abstand 96 aufweisen. Dabei sind die Wellen 38 koaxial zueinander ausgerichtet. Die Enden der Wellen 38 sind über die Kupplung 98 miteinander verbunden. Ein stufenlos einstellbarer Antriebsmotor 100 ist auf dem Träger 78 befestigt und über ein Zugmittel 102 mit einer auf der Welle 38 vorgesehenen Zugmittelscheibe antriebsverbunden. Das Förderband 44 eines jeden Förderelementes 16 kann ohne weiteres entfernt werden, wenn hierzu die Kupplung 98 auf dem frei liegenden Teil der Welle 38 verschoben wird, so daß dann das Förderband 44 ohne weiteres durch den Zwischenraum zwischen den Wellenenden der Wellen 38 geführt werden kann. Eine einstellbare Spannrolle 108, die an dem Winkelträger 82 angeordnet sein kann, dient zur Zugmittelspannung des Zugmittels 102.

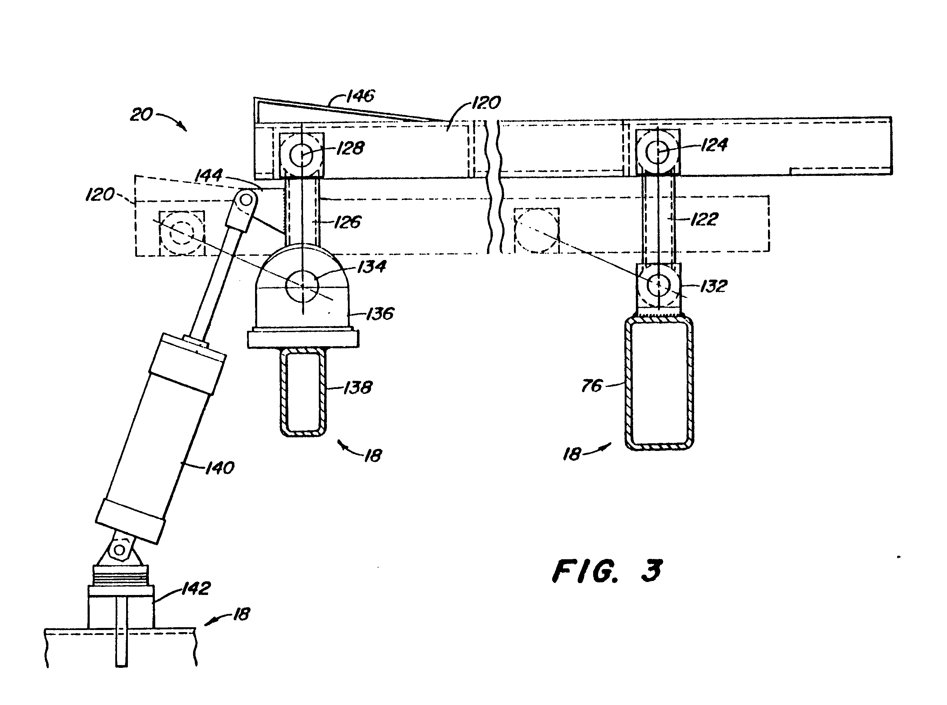

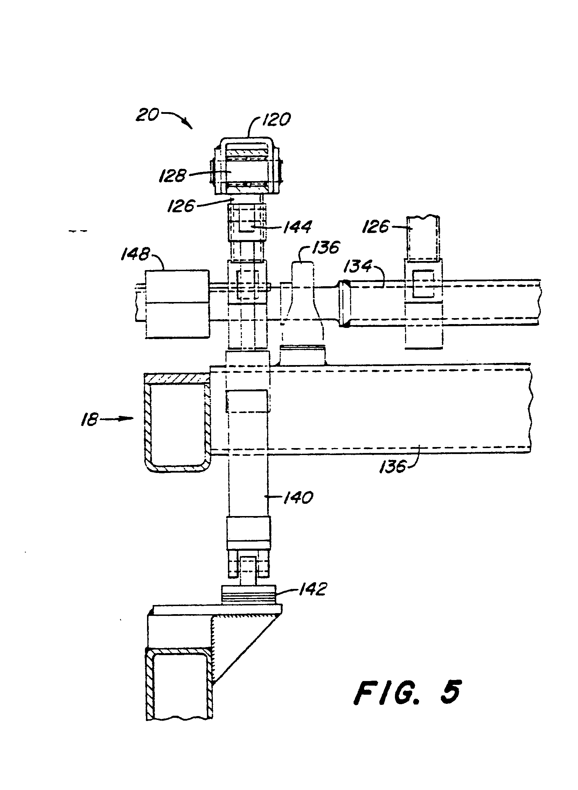

Die einzelnen Tragelemente 20 sind zwischen den einzelnen Förderelementen 16 angeordnet (Fig. 2). Wie aus den Figuren 1, 3 und 5 hervorgeht, besteht ein jedes Tragelement 20 aus einem entsprechenden Träger 120, der jeweils parallel zu dem entsprechenden Förderelement 16 verläuft. Der Träger 120 weist beispielsweise einen rechteckförmigen Querschnitt auf und ist im Bereich des vorderen der Schneidvorrichtung 12 zugelegenen Endes der Fördervorrichtung 10 an einen vertikal verlaufenden Arm 122 mittels eines Gelenkbolzens 124 angeschlossen, der sich hierzu durch die Seitenteile des Trägers 120 erstreckt. Ein vertikal verlaufender Arm 126 ist im Abgabebereich der Träger 120 gelenkig mit den Trägern 120 über einen Gelenkbolzen 128 verbunden. Das untere Ende des vorderen Armes 122 ist mittels einer Gelenkhalterung 132 an die obere Seite des Trägers 76 des Hauptförderrahmens 18 gelenkig angeschlossen. Der Arm 126, der etwas kürzer als der vordere Arm 122 ist, ist mittels einer Gelenklagerung 136 an einen Querträger 138 angeschraubt. Wie aus den Figuren 1 und 3 hervorgeht, bilden die einzelnen Arme 122, 126 mit dem Träger 120 und dem Rahmen 18 einen Parallelogrammlenker. Ein Hydraulikzylinder 140 ist mit seinem zylinderseitigen Ende an eine Halterung 142 gelenkig angeschlossen, die wiederum an dem Hauptförderrahmen 18 befestigt ist. Das kolbenstangenseitige Ende des Hydraulikzylinders 140 ist über eine Halterung 144 mit dem Arm 126 fest verbunden, beispielsweise verschweißt. Die quer verlaufende Antriebswelle 134 (siehe Fig. 5) ist mittels entsprechender Lagerelemente auf dem Arm 126 drehbar gelagert, der wiederum mit dem Hydraulikzylinder 140 verbunden ist. Die übrigen Arme 126 der Tragelemente 20 sind auf ähnliche Weise mit der Antriebswelle 134 verbunden. Durch Ausfahren der Kolbenstange des Hydraulikzylinders 140 werden die Arme 122 und 126 um ihre Anschlußstellen im Uhrzeigerdrehsinn geschwenkt, um die Tragelemente 20 in die in Fig. 1 in ausgezogenen Linien dargestellte Position zu bringen (siehe Fig. 1 und 5). Mittels der Antriebswelle 134 werden auch die anderen Arme 126 entsprechend verstellt, so daß die einzelnen Träger 120 gleichmäßig in die durch die einzelnen Förderbänder gebildete höhere Ebene gebracht werden. Ein geneigt verlaufender Abweiser 146 ist an die rückwärtigen Enden (siehe Fig. 1) der Träger 120 angeschlossen und verläuft parallel zum mittleren Teil des Förderbandes 44, um somit das Förderband 44 zu schützen, wenn längere Materialstücke abgeschnitten und auf das Förderband abgegeben werden. Wenn die Träger 120 sich in ihrer angehobenen Stellung befinden, so erstreckt sich der Abweiser 146 etwas oberhalb der Förderebene (siehe Fig. 1, 3). Ist der abgeschnittene Metallteil bzw. die Metallplatte auf die Träger 120 abgegeben, so werden die Kolben der Hydraulikzylinder 140 eingefahren, um die Träger 120 gleichmäßig in ihre untere Stellung gemäß Fig. 3 zu schwenken (gestrichelte Darstellung). In dieser Stellung befindet sich die Oberfläche der Träger 120 unterhalb der Förderebene. Sind die Arme 122 und 126 im Uhrzeigerdrehsinn um ihre Anschlußstellen am Hauptförderrahmen 18 geschwenkt, so können die Metallteile allmählich auf die Oberfläche der Förderbänder 44 abgelegt werden. Da die Förderebene mit Bezug auf die Standfläche der Maschine und in Richtung des Abgabeendes ansteigend verläuft und der Arm 122 etwas länger als der Arm 126 ist, wird das voreilende Ende des abgetrennten Metallteiles zuerst auf die Oberfläche der Förderbänder 44 abgesenkt, bevor das der Schneidvorrichtung, zugelegene Ende der Metallplatte die Förderbänder berührt, so daß keine Beschädigung der Förderbänder auftritt. Der stufenlos einstellbare Antriebsmotor 100 kann ebenso auf langsamere Drehzahlen eingestellt werden, so daß bei Kontakt des abgeschnittenen Metallteiles mit den Förderbändern dieses gut erfaßt werden kann, ohne daß dabei eine Beschädigung zu befürchten ist. Die Tragelemente 20 sind in der Weise mit dem Hauptförderrahmen 18 beweglich verbunden, daß keine Kollision mit den Förderelementen 16 auftritt. So ist es auch möglich, daß die Förderelemente 16 ohne weiteres repariert oder entfernt werden können, ohne daß sie mit den Tragelementen 20 kollidieren. Die Antriebswelle 134 besteht aus mehreren einzelnen Wellenteilen, die über Kupplungselemente 148 verbunden sind, und zwar auf ähnliche Weise wie die Wellenteile der Welle 38. Die Kupplungselemente 148 sind als Kupplungsbuchsen ausgebildet und können mit einer entsprechenden Innenverzahnung versehen werden, die eine Antriebsverbindung zwischen dem Kupplungselement 148 und dem entsprechenden Wellenteil herstellt. Um die einzelnen Wellenteile voneinander zu trennen, braucht nur eine entsprechende Stellschraube, die am Kupplungselement 148 vorgesehen sein kann, gelöst zu werden, um dann das Kupplungselement 148 auf einem Wellenteil der Welle 134 verschieben zu können und somit die beiden Wellenenden freizugeben.

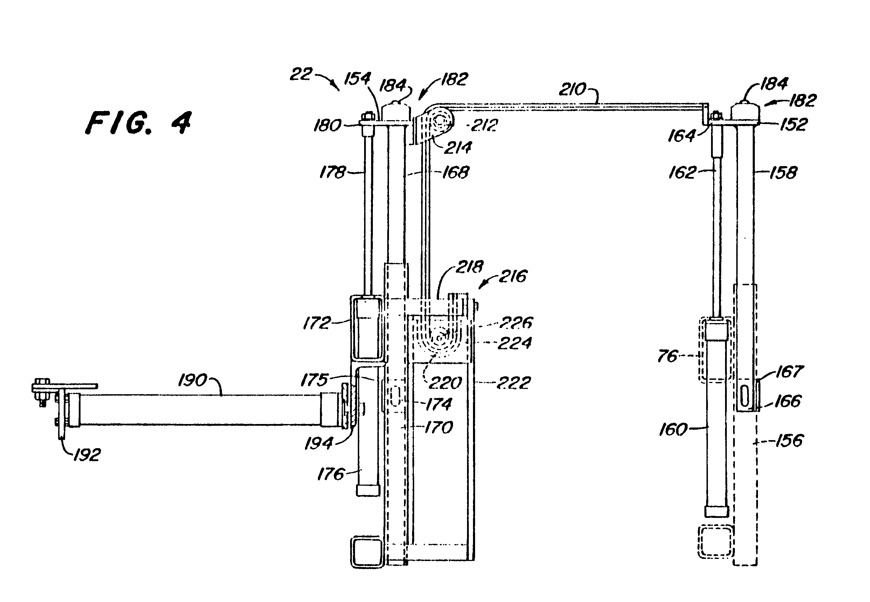

Das Führungselement 22 befindet sich im Bereich der Tragelemente 20 zwischen den einzelnen Förderelementen 16. Das Führungselement 22 ist ebenfalls derart mit dem Hauptförderrahmen 18 verbunden, daß die einzelnen Förderelemente 16 nicht mit diesem kollidieren, wenn dieser repariert oder ersetzt werden muß. Somit brauchen die Führungselemente nicht entfernt zu werden, wenn die Förderelemente 16 ausgebaut werden. Das Führungselement 22 weist zahlreiche nebeneinander angeordnete vordere Tragpfosten 152 sowie mittlere und hintere Tragpfosten 154 auf. Die Tragpfosten 152 und 154 liegen jeweils in einer Ebene, die in Förderrichtung verläuft. Die einzelnen Tragpfosten 152 und 154 sind unabhängig voneinander verstellbar und können somit der unterschiedlichen Größe des Materials angepaßt werden. Jeder der vorderen Tragpfosten 152 weist einen im Querschnitt rechteckförmigen Rohrteil 156 auf, der mit dem Träger 76 fest verbunden ist. In dem Rohrteil 156 ist eine Teleskopstange 158 verschiebbar aufgenommen. Parallel zur Teleskopstange 158 verläuft ein Hydraulikzylinder 160, der einenends an dem Träger 76, anderenends über seine Kolbenstange 162 an einer Halterung 164 angeschlossen ist, die mit der Teleskopstange 158 beispielsweise verschweißt sein kann. Der Rohrteil 156 ist vertikal mit einer Schlitzöffnung versehen, die zur Aufnahme eines Führungselementes 166 dient. Das Führungselement 166 ist an das untere Ende der Teleskopstange 158 angeschlossen und bewegt sich in der Schlitzöffnung des Hydraulikzylinders 160, wenn dieser die Teleskopstange 158 ein- bzw. ausfährt. Das Führungselement ist mittels eines Befestigungselementes 167 gesichert, so daß die Teleskopstange 158 vertikal verstellt werden kann, wenn die Kolbenstange 162 des Hydraulikzylinders verstellt wird. Jeder der Tragpfosten 154 ist mit einer ähnlichen Teleskopeinrichtung ausgerüstet, wie sie in Fig. 4 gezeigt ist. Die Teleskopstange 168 ist ebenfalls in einem Rohrteil 170 verschiebbar aufgenommen, der mit einem Querträger 172 fest verbunden ist. Der Rohrteil 170 ist ebenfalls mit einer Schlitzöffnung zur Aufnahme eines Führungselementes 174 ausgerüstet. Das Führungselement 174 ist über eine Halterung 175 mit der Teleskopstange 168 verbunden und kann wie die Teleskopstange 158 ein- und ausgefahren werden. Der Querträger 172 dient ferner zum Anschluß eines Hydraulikzylinders 176 neben dem Tragpfosten 154. Der Hydraulikzylinder 176 weist eine Kolbenstange 178 auf, die über eine horizontal verlaufende Halterung an das obere Ende der Teleskopstange 168 angeschlossen ist. Ein jeder Tragpfosten 152 und 154 weist einen Kugellagerteil 182 auf, der an der oberen Seite der Halterung 164 und 180 befestigt ist. Der Kugellagerteil 182 besteht aus einer Kugel 184, die in einem Gehäuse angeordnet ist und zur Aufnahme der Metallteile dient, wenn diese auf die Kugellagerteile 182 abgelegt werden, damit die Metallteile entsprechend ausgerichtet werden können. Die hinteren Tragpfosten 154 können mit Bezug auf die vorderen Tragpfosten 152 von der in ausgezogenen Linien dargestellten Stellung in eine in gestrichelten Linien dargestellte Stellung (Fig. 2) bewegt werden. Die unterschiedlichen horizontalen Abstände zwischen den Tragpfosten 152 und 154 sind deshalb wünschenswert, da die Metallteile nicht stets die gleiche Breite aufweisen. Die Hydraulikzylinder 160 und 176 können gleichzeitig oder unabhängig voneinander verstellt werden.

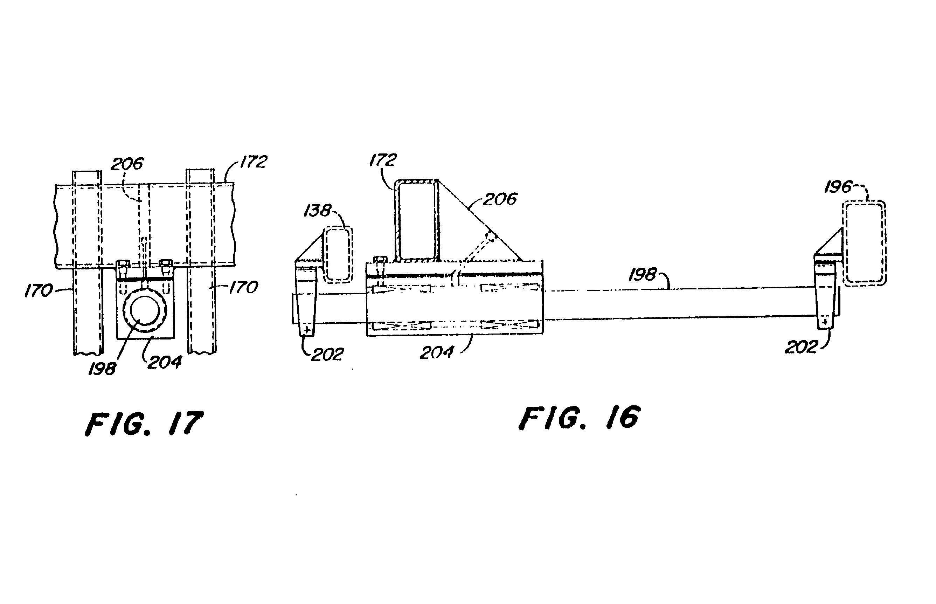

Wie aus den Figuren 1 und 4 hervorgeht, ist das Ende eines Hydraulikzylinders 190 an eine Halterung 192 des Hauptförderrahmens 18 angeschlossen. Der Hydraulikzylinder 190 verläuft im wesentlichen horizontal und parallel zur Achse des Förderelementes 16 und weist eine Kolbenstange auf, die mit einer Halterung 194 verbunden ist, die wiederum an den Querträger 172 angeschlossen ist. Der Querträger 172 kann gegenüber dem Hauptförderrahmen 18 parallel zum Förderelement 16 verstellt werden, so daß die einzelnen Tragpfosten 154 näher an die Tragpfosten 152 herangebracht werden. Um eine Verstellung des Querträgers 172 parallel zu den Achsen der Förderelemente 16 zu bewirken, ist eine Gleitschiene 198 vorgesehen (Fig. 16 und 17), die über Halterungen 202 einenends an den Querträger 138 und an einen Querträger 196 angeschlossen ist. Wie aus Fig. 16 hervorgeht, ist die Gleitschiene 198 zwischen diesen beiden Querträgern 138 und 196 angeordnet. Auf der Gleitschiene 198 lagert eine Hülse 204, wobei der Querträger 172 an die Oberseite einer Tragvorrichtung 206 angeschweißt ist, die mit der Hülse 204 beispielsweise über Schraubenbolzen verbunden sein kann.

Damit insbesondere kleinere bzw. leichtere Materialteile nicht zwischen die einzelne Tragpfoste 152 und 154 gelangen, ist ein flexibles Verbindungselement bzw. ein Zugseil 210 an die Halterung 164 des Tragpfostens 152 angeschlossen. Das Zugseil 210 erstreckt sich nach hinten und über eine Rolle 212 die in einer gabelförmigen Halterung 214 an dem oberen Ende des Tragpfostens 154 gehalten ist. Das Zugseil 210 erstreckt sich von der Rolle 212 nach unten zu einer Vorrichtung 216, die die entsprechende Spannung für das Zugseil 210 zwischen den Tragpfosten 152 und 154 aufrechterhält und sich automatisch der Abstandsveränderung zwischen den Tragpfosten 152 und 154 anpaßt, wenn der Hydraulikzylinder 190 verstellt wird. Das Zugseil 210 ist mit seinem unteren Ende an die Vorrichtung 216 angeschlossen, die über eine Halterung 218 an den Querträger 172 angeschlossen ist. Das untere Ende ist hierzu um eine Rolle 226 geführt, die in mit Abstand zueinander angeordneten Führungsplatten 224 aufgenommen ist. Die Führungsplatten 224 sind an vertikal verlaufenden Streben 222 verschiebbar gelagert, die einenends an die Halterung 218, anderenends an einen unteren Träger bzw. den Rohrteil 170 angeschlossen sind. Das um die Rolle 226 geführte Zugseil 210 ist an seinem freien Ende mit der Halterung 218 fest verbunden. Wird die Kolbenstange des Hydraulikzylinders 190 ausgefahren, und zwar von der Stellung gemäß Fig. 4, so wird infolge des Gewichtes der Führungsplatten 224 die Schlaufe 220 des Zugseiles 210 nach unten gezogen, so daß die Zugspannung des Zugseiles zwischen den Tragpfosten 152 und 154 automatisch aufrechterhalten wird. Das Zugseil 210 kann auch als Zugkette ausgebildet sein, wobei der horizontal verlaufende Teil des Zugseiles stets auf der gleichen Ebene läuft wie die einzelnen Kugeln 184 des Kugellagerteils 182. Die vorrichtung 216 hält für das Zugseil 210 ebenfalls die erforderliche Spannung aufrecht, wenn die Hydraulikzylinder 160 und 176 ein- bzw. ausgefahren werden, um hierdurch die Tragpfosten 152 und 154 entsprechend vertikal zu verstellen.

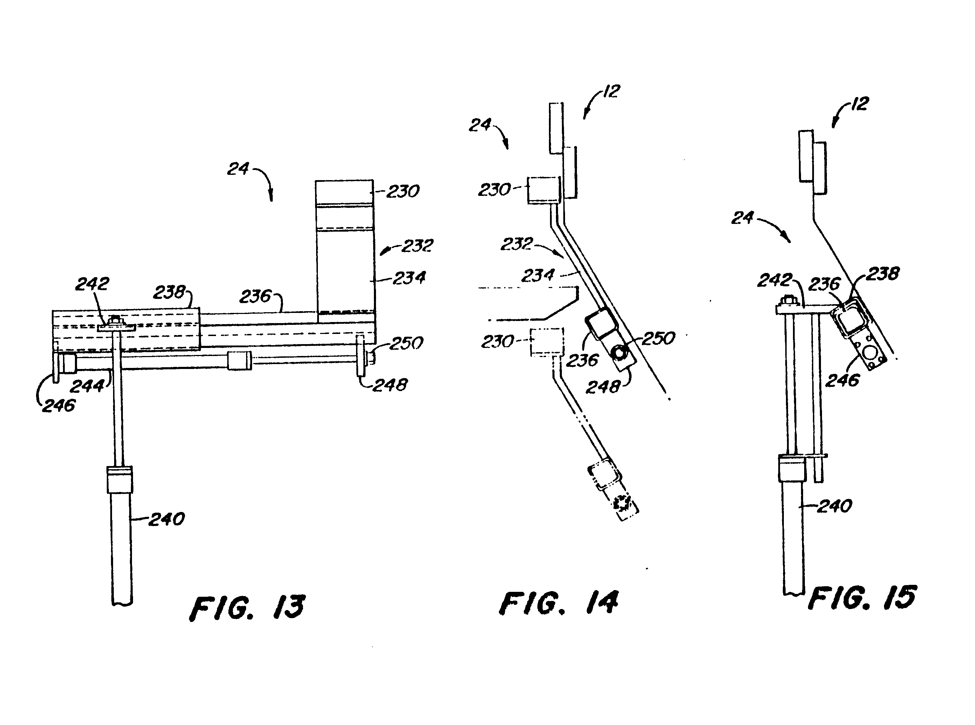

Die Greif- und Fördervorrichtung ist zwischen verschiedenen Stellungen verstellbar, wie dies aus der Fig. 14 hervorgeht, in der der Magnetkopf 230 sich in seiner unteren gestrichelten Darstellung und in seiner oberen in ausgezogenen Linien dargestellten Stellung befindet, wobei der Magnetkopf 230 dicht neben der Scherleiste der Schneidvorrichtung 12 liegt. Der Magnetkopf 230 ist an einer Tragvorrichtung 232 angeordnet, die als abgewinkelte Tragplatte 234 ausgebildet ist. Wie aus Fig. 14 hervorgeht, ist die Tragplatte 234 bei angehobenem Magnetkopf 230 in seiner Arbeitsstellung entsprechend der Form der Rückseite der Scherleiste der Schneidvorrichtung 12 angepaßt. Dabei liegt der Magnetkopf 230 direkt unter der Scherleiste der Schneidvorrichtung12. Die abgewinkelte Tragplatte 234 ist an die Oberkante einer Gleitschiene 236 angeschweißt. Die Gleitschiene 236 weist einen rechteckförmigen Querschnitt auf und ist in einem einen entsprechenden Querschnitt aufweisenden Tragrohr 238 verschiebbar aufgenommen, das, um entsprechend vertikal verstellt zu werden, dicht an der Rückseite der Scherleiste der Schneidvorrichtung 12 vorgesehen ist. Hierzu sind ein bzw. zwei Hydraulikzylinder 240 mit Abstand zueinander angeordnet und mit ihren kolbenstangenseitigen Enden an das Tragrohr 238 angeschlossen. Ein jeder Hydraulikzylinder 240 ist mittels einer Halterung 242 mit dem Tragrohr 238 verbunden. Die Halterung 242 kann an die Ecke des Tragrohres 238 angeschweißt sein. Die Tragvorrichtung 232 läßt sich quer und parallel zur Scherleiste der Schneidvorrichtung 12 verstellen, und zwar in bzw. aus der in Fig. 14 und 15 dargestellten Ebene. Hierzu ist ein Hydraulikzylinder 244 einenends an das Tragrohr 238 mittels einer Halterung 248 angeschlossen. Das kolbenstangenseitige Ende des Hydraulikzylinders 244 ist an eine Halterung 248 angeschlossen, die beispielsweise an das Ende der Gleitschiene 236 angeschweißt sein kann. Das kolbenstangenseitige Ende des Hydraulikzylinders 244 weist einen Gewindeteil auf, der mittels einer Mutter 250 mit der Halterung 248 verbunden ist. Bevor ein Metallteil von dem übrigen Metallband bzw. Metallteil mittels einer Schneidvorrichtung 12 abgetrennt wird, wird der Hydraulikzylinder 240 ausgefahren, um den Magnetkopf 230 anzuheben und dicht in den Bereich der Schneidkante der Schneidvorrichtung 12 gemäß Fig. 14 zu bringen (siehe ausgezogene Linien). Der Magnetkopf 230 ergreift das Metallband, nachdem es von dem übrigen Metallband abgetrennt worden ist. Hat der Magnetkopf 230 das Metallband erfaßt, so wird der Hydraulikzylinder 244 mit Druckmittel beaufschlagt, um die Gleitschiene 236 in dem zugehörigen Tragrohr 238 zu verschieben und somit den Metallteil von der Scherleiste der Schneidvorrichtung 12 wegzubewegen. Die Greif- und Fördervorrichtung 24 verhindert, daß der Metallstreifen auf die Förderoberfläche sofort herunterfällt, und ermöglicht, daß der erfaßte Metallteil zur Seite des Rahmens der Greif- und Fördervorrichtung bewegt wird. Hier kann das Metallband zu einer Metallrolle mittels einer in der Zeichnung nicht dargestellten Aufwickelvorrichtung aufgewickelt werden und in einen in der Zeichnung nicht dargestellten Sammelbehälter abgegeben werden.

Im Arbeitseinsatz werden die hinteren Tragpfosten 154 mittels des Hydraulikzylinders 190 entsprechend ausgerichtet, um den entsprechenden Metallteil in die richtige Schneidposition zu bringen. Die Reihe, die aus den einzelnen Tragpfosten 152 und 154 gebildet wird, wird so weit angehoben, daß die Kugeln 184 in etwa in der gleichen horizontal verlaufenden Ebene wie die Scherleiste der Schneidvorrichtung 12 liegen. Die Tragpfosten 152 und 154 nehmen den Metallteil auf, der aufgrund der Kugellagerteile 182 auf einfache Weise in die gewünschte Position ausgerichtet werden kann. Das Zugseil 210, das sich zwischen den Reihen von Tragpfosten 152 und 154 erstreckt, verhindert, daß das Ende insbesondere eines dünnen Metallteiles nach unten zwischen die einzelnen Reihen der Förderelemente 16 gelangt. Die Träger 120 der Tragelemente 20 werden über die Förderebene hinaus verstellt, die durch die Förderbänder 44 der Förderelemente 16 gebildet wird. Hierzu werden die Hydraulikzylinder 140 entsprechend mit Druckmittel versorgt und verschwenken die Arme 122 und 126 in eine etwa vertikal verlaufende Position. Die einzelnen Tragpfosten 152 und 154 werden daraufhin auf die Ebene der Scherleiste abgesenkt und danach die Scherleiste der Schneidvorrichtung 12 entsprechend betätigt. Das abgeschnittene Material bzw. die Metallplatte gelangt nach Absenken der Tragpfosten 152, 154 auf die Träger 120, die sich über die Arme 122 und 126 auf dem Hauptförderrahmen 18 der Fördervorrichtung 10 abstützen. Wird beispielsweise ein relativ großer Metallteil abgeschnitten, so verhindert der Abweiser 146, daß der Teil, der sich im Bereich des Abgabeendes der Fördervorrichtung befindet, mit den Förderelementen 16 Kontakt bekommt. Wird der Metallteil von den Trägern 120 aufgenommen, so werden die Hydraulikzylinder 140 eingefahren, so daß die Arme 122 und 126 entsprechend verschwenkt werden und die Träger 120 unter die Förderebene bewegt werden, so daß der abgetrennte Metallteil auf die Förderbänder 44 gelangt. Hierbei wird der Teil des Metalles im Bereich des Abgabeendes zuerst einen Kontakt mit den Förderbändern 44 haben. Die Geschwindigkeit des Antriebsmotors wird so eingestellt, daß eine optimale Aufnahme des Metallteiles gehrleistet ist, wenn dieser über das Förderband bzw. die Förderbänder 44 zum Abgabeende der Fördervorrichtung 10 bewegt wird. Am stirnseitigen Abgabeende kann der Metallteil entweder zu einem Stapel von Metallteilen abgelegt werden oder beispielsweise über eine besondere Wickelvorrichtung aufgewickelt werden.

Sollten beispielsweise die Förderbänder 44 ausgewechselt werden, so braucht lediglich die zugehörige Kupplung 98 auf der Welle 38 so weit verschoben zu werden, daß die Wellenteile der Welle 38 einen Spalt freigeben (bei 96). Danach kann das entsprechende Förderband 44 ohne weiteres von der Riemenscheibe 36 der Spannrolle 40, den Spannrollen 52 und 54 sowie der Spannrolle 48 abgenommen werden und durch den Spalt zwischen den Enden der Wellenteile der Welle 38 hindurch geführt werden. Auf ähnliche Weise wird ein neues Förderband 44 durch den Spalt geführt und auf die einzelnen Rollen gebracht. Danach wird die Kupplung 98 wieder über den Spalt hinaus verschoben und verbindet auf diese Weise die Enden der Wellenteile der Welle 38. Soll ein Förderelement entsprechend ausgewechselt werden, so braucht lediglich die Kupplung 98 wieder verstellt zu werden und die zugehörigen Schraubenbolzen aus den Winkelhalterungen 84, 86 entfernt zu werden. Danach kann das einzelne Förderelement 16 von dem Hauptförderrahmen 18 entfernt werden und ein anderes Förderelement 16 eingebaut werden, ohne daß dadurch eine Kollision mit den einzelnen Tragelementen 20, dem Führungselement 22 und der Greif- und Fördervorrichtung 24 zu befürchten ist. Wie es aus Vorstehendem hervorgeht, läßt sich die Wartungsarbeit an der Fördervorrichtung 10 leicht und schnell mit einer einzigen Bedienungsperson bewerkstelligen. Durch Druckmittelbeaufschlagung der Abstützelemente 26 kann außerdem der gesamte Hauptförderrahmen 18 mit allen Einrichtungen ohne weiteres von der Schneidvorrichtung 12 wegbewegt werden, um somit den Ausbau eines Förderelementes zu erleichtern.

**Patentansprüche**

1. Vorrichtung zum Fördern von geschnittenen Metallteilen mit zahlreichen nebeneinander angeordneten, über eine Welle (38) antreibbaren Förderelementen (16) , die aus je einem Rahmen (30) mit drehbar gelagerten Rollen (36, 40) zur Aufnahme je eines Förderbandes (44) gebildet sind, wobei die Rahmen (30) über Verbindungselemente (82, 84, 86) mit einem Hauptförderrahmen (18) verbunden sind und zwischen den jeweils nebeneinander liegenden Förderelementen (16) je zwei mit Abstand zueinander angeordnete Arme (122, 126) zur Aufnahme von Trägern (120) parallelogrammartig angeschlossen sind, die ihrerseits an je eine Gelenkhalterung (144) geschlossen sind und über je einen Hydraulikzylinder (140) in verschiedene Höhenlagen verschwenkbar sind, dadurch gekennzeichnet, daß zwischen den einzelnen Förderelemente (16) weitere höhenverstellbare Tragelemente (22) vorgesehen sind, die zur Aufnahme der Metallteile, bevor sie geschnitten sind, dienen, wobei die in Förderrichtung des Materials hintereinander liegenden Tragelemente mit ihren oberen Enden über flexible Verbindungselemente (210) verbunden sind, und daß zum Ausgleich der Abstandsveränderung der gegenüberliegenden Tragelemente eine Vorrichtung (216) zur Spannung der Verbindungselemente vorgesehen ist.

2. Vorrichtung nach Anspruch 1, dadurch gekennzeichnet, daß das über die Rollen (36, 40) geführte Förderband (44) eine nach oben zeigende Förderfläche bildet, die unterhalb der Schneidvorrichtung (12) verläuft.

3. Vorrichtung nach einem oder mehreren der vorherigen Ansprüche, dadurch gekennzeichnet, daß am Ende der Förderelemente (16) eine Fördervorrichtung (24) vorgesehen ist, die das abgeschnittene Material quer zur Förderrichtung des Materials auf den Förderelementen (16) bewegt.

4. Vorrichtung nach einem oder mehreren der vorherigen Ansprüche, dadurch gekennzeichnet, daß den einzelnen Förderbändern (44) jeweils eine Spannvorrichtung (50) zugeordnet ist, die aus zwei in einer schwenkbaren, gegen die Wirkung einer Feder verstellbaren Halterung (56) drehbar aufgenommenen Spannrollen (52, 54) gebildet ist, wobei der untere Trum des Förderbandes (44) einmal oberhalb einer Spannrolle (52) und einmal unterhalb einer Spannrolle (54) geführt ist.

5. Vorrichtung nach einem oder mehreren der vorherigen Ansprüche, dadurch gekennzeichnet, daß die einzelnen die Welle (38) bildenden Wellenteile stirnseitig mit Abstand zueinander angeordnet sind und zum Auswechseln des Förderbandes einen Zwischenraum bilden.

6. Vorrichtung nach einem oder mehreren der vorherigen Ansprüche, dadurch gekennzeichnet, daß das Wellenende jeweils mit dem benachbarten Wellenende über das auf der Welle (38) verschiebbare Kupplungselement (98) antriebsverbindbar ist.

7. Vorrichtung nach einem oder mehreren der vorherigen Ansprüche, dadurch gekennzeichnet, daß die Achsen der einzelnen Rollen bzw. Riemenscheiben (36, 40) zur Aufnahme des Förderbandes (44) jeweils endseitig freitragend gelagert sind.

8. Vorrichtung nach einem oder mehreren der vorherigen Ansprüche, dadurch gekennzeichnet, daß die Oberfläche der Rollen bzw. Riemenscheiben (36, 40) zur Aufnahme des Förderbandes (44) ballig ausgebildet und zumindest eine Riemenscheibe stirnseitig mit einem Kragen versehen ist.

9. Vorrichtung nach einem oder mehreren der vorherigen Ansprüche, dadurch gekennzeichnet, daß der Antriebsmotor (100) zum Antrieb der Welle (38) als stufenlos einstellbarer Motor ausgebildet ist.

10. Vorrichtung nach einem oder mehreren der vorherigen Ansprüche, dadurch gekennzeichnet, daß der Hauptförderrahmen (18) zwei mit Abstand zueinander angeordnete, quer zu den Förderelementen (16) verlaufende Träger (76, 78) aufweist und die einzelnen Förderelemente (16) über Winkelhalterungen (84, 86) und Schraubenbolzen an die auf dem Träger vorgesehenen Winkelträger (80, 82) lösbar angeschlossen sind.

11. Vorrichtung nach einem oder mehreren der vorherigen Ansprüche, dadurch gekennzeichnet, daß die zwischen den einzelnen Förderelementen (16) vorgesehenen Tragelemente (22) als ein- und ausfahrbare Teleskopstangen (158, 168) ausgebildet sind sind, die die einzelnen Metallteile zur Schneidvorrichtung (12) ausrichten.

12. Vorrichtung nach einem oder mehreren der vorherigen Ansprüche, dadurch gekennzeichnet, daß die einzelnen Tragelemente (22) lösbar mit dem Hauptförderrahmen (18) verbunden sind.

13. Vorrichtung nach Anspruch 11, dadurch gekennzeichnet, daß die Tragelemente (22) über Hydraulikzylinder (160, 176) vertikal verstellbar sind und die oberen Enden der Tragelemente in etwa auf die gleiche Ebene wie die Scherebene der Schneidvorrichtung (12) verstellbar sind.

14. Vorrichtung nach Anspruch 13, dadurch gekennzeichnet, daß an den oberen Enden der Teleskopstangen (158, 168) Kugellagerteile (184) zur verschiebbaren Aufnahme der Metallteile vorgesehen sind.

15. Vorrichtung nach Anspruch 13, dadurch gekennzeichnet, daß zumindest eine Teleskopstange (168) zur Aufnahme der flexiblen Verbindungselemente (210) einer Rolle (212) ausgerüstet ist, um die die Verbindungselemente (210) geführt sind, dessen unteres Ende über eine zweite Rolle (226) geführt und an eine am Querträger (172) vorgesehene Halterung (218) angeschlossen ist, wobei bei einer Abstandsveränderung oder einer Höhenverstellung der Teleskopstangen (158, 168) die Verbindungselemente (210) über die mit einem Gewicht versehene Vorrichtung (216) stets auf die notwendige Zugspannung gehalten werden.

16. Vorrichtung nach Anspruch 12, dadurch gekennzeichnet, daß die an den Querträger (172) angeschlossene Teleskopstange (168) über einen Hydraulikzylinder (190) horizontal verstellbar ist, der einenends mit dem Hauptförderrahmen (18), anderenends mit der Teleskopstange (168) verbunden ist.

17. Vorrichtung nach einem oder mehreren der vorherigen Ansprüche, dadurch gekennzeichnet, daß die das Gewicht tragende Vorrichtung (216) zur ständigen Spannung der Verbindungselemente (210) mittels des Hydraulikzylinders (176) verstellbar ist.

18. Vorrichtung nach einem oder mehreren der vorgerigen Ansprüche, dadurch gekennzeichnet, daß die Vorrichtung (216) aus zwei gegenüberliegenden Führungsplatten (224) gebildet ist, die die Rolle (226) zwischen sich aufnehmen und um die das Zugseil (210) geführt ist, wobei das eine Ende der Verbindungselemente (210) über die Halterung (218) an den Querträger (172) angeschlossen ist.

19. Vorrichtung nach einem oder mehreren der vorherigen Ansprüche, dadurch gekennzeichnet, daß der Querträger (172) zur Aufnahme der horizontal verstellbaren Teleskopstange (168) und des zugehörigen Hydraulikzylinders (176) auf einer Hülse (204) befestigt ist, die mittels des Hydraulikzylinders (190) auf einer Gleitschiene (198) verschiebbar ist.

20. Vorrichtung nach einem oder mehreren der vorherigen Ansprüche, dadurch gekennzeichnet, daß im Bereich der Schneidvorrichtung (12) und am vorderen Ende der Fördervorrichtung (10) ein über einen ersten Hydraulikzylinder (240) höhenverstellbarer und über einen zweiten Hydraulikzylinder (244) horizontal verstellbarer Magnetkopf (230) zur Aufnahme und Weiterbewegung der Metallteile quer zur Bewegungsrichtung der Förderelemente (16) am Hauptförderrahmen (18) angeordnet ist.

**Revendications**

1. Dispositif pour transporter des pièces métalliques coupées, comportant un grand nombre d'éléments transporteurs (16) disposés les uns à côté des autres, pouvant être entraînés par l'intermédiaire d'un arbre (38), qui sont constitués chacun par un châssis (30) muni de rouleaux (36, 40) montés rotatifs pour la réception d'une bande transporteuse (44) respective, les châssis (30) étant reliés, par l'intermédiaire d'éléments de liaison (82, 84, 86), à un châssis de transport principal (18) et, entre les éléments transporteurs (16) voisins, deux bras (122, 126) respectifs écartés l'un de l'autre étant chaque fois articulés à la façon d'un parallélogramme pour la réception de supports (120), qui sont eux-mêmes articulés chacun à une console d'articulation (144) et peuvent être amenés par pivotement dans différentes positions en hauteur au moyen de vérins hydrauliques (140) respectifs, caractérisé en ce qu'il est prévu, entre les éléments transporteurs (16) individuels, d'autres éléments de support (22) réglables en hauteur, qui servent à recevoir les pièces métalliques avant qu'elles soient coupées, les éléments de support situés les uns après les autres dans le sens de transport du matériau étant reliés par leurs extrémités supérieures, par l'intermédiaire d'éléments de liaison (210) flexibles, et en ce que, pour compenser la variation d'écartement des éléments de support opposés, il est prévu un dispositif (216) pour la tension des éléments de liaison.

2. Dispositif selon la revendication 1, caractérisé en ce que la bande transporteuse (44) guidée sur les rouleaux (36, 40) forme une surface de transport dirigée vers le haut, qui s'étend au-dessous du dispositif de coupe (12).

3. Dispositif selon une ou plusieurs des revendications précédentes, caractérisé en ce qu'il est prévu, à l'extrémité des éléments transporteurs (16), un dispositif de transport (24) qui déplace le matériau découpé transversalement par rapport au sens de transport du matériau sur les éléments transporteurs (16).

4. Dispositif selon une ou plusieurs des revendications précédentes, caractérisé en ce qu'il est prévu, en combinaison avec chacune des bandes transporteuses individuelles (44), un dispositif de tension respectif (50) qui comprend deux rouleaux de tension (52, 54) reçus de façon à pouvoir tourner dans un support pivotant (56) pouvant être déplacé contre l'action d'un ressort, le brin inférieur de la bande transporteuse (44) passant une fois au-dessus d'un rouleau de tension (52) et une fois au-dessous d'un rouleau de tension (54).

5. Dispositif selon une ou plusieurs des revendications précédentes, caractérisé en ce que les différentes sections d'arbre constituant l'arbre (38) sont disposées selon un certain écartement mutuel par leurs faces terminales et ménagent une intervale pour le remplacement de la bande transporteuse.

6. Dispositif selon une ou plusieurs des revendications précédentes, caractérisé en ce que l'extrémité d'un arbre peut être reliée cinématiquement chaque fois à l'extrémité d'arbre voisine par l'intermédiaire d'un élément d'accouplement (98) pouvant coulisser sur l'arbre (38).

7. Dispositif selon une ou plusieurs des revendications précédentes, caractérisé en ce que les axes des rouleaux individuels ou des poulies individuelles (36, 40) servant à la réception de la bande transporteuse (44) sont montés chaque fois en porte-à-faux par leur extrémité.

8. Dispositif selon une ou plusieurs des revendications précédentes, caractérisé en ce que la surface des rouleaux ou poulies (36, 40) servant à la réception de la bande transporteuse (44) a une forme bombée, et en ce qu'au moins une poulie est munie d'une collerette à une extrémité.

9. Dispositif selon une ou plusieurs des revendications précédentes, caractérisé en ce que le moteur d'entraînement (100) servant l'entraînement de l'arbre (38) est constitué par un moteur à réglage progressif.

10. Dispositif selon une ou plusieurs des revendications précédentes, caractérisé en ce que le châssis de transport principal (18) comporte deux poutres (76, 78) disposées à une certaine distance l'une de l'autre et s'étendant transversalement par rapport aux éléments transporteurs (16), et en ce que ces éléments transporteurs individuels (16) sont reliés de façon amovible aux cornières de support (80, 82) prévues sur le châssis de support par l'intermédiaire de consoles en équerre (84, 86) et de boulons.

11. Dispositif selon une ou plusieurs des revendications précédentes, caractérisé en ce que les éléments de support (22) prévus entre les éléments transporteurs individuels (16) sont réalisés sous la forme de barres télescopiques (158, 168) pouvant être rentrées et sorties, qui alignent les pièces métalliques individuelles par rapport au dispositif de coupe (12).

12. Dispositif selon une ou plusieurs des revendications précédentes, caractérisé en ce que les éléments de support individuels (22) sont reliés de façon amovible au châssis de transport principal (18).

13. Dispositif selon la revendication 11, caractérisé en ce que les éléments de support (22) peuvent être déplacés verticalement par l'intermédiaire de vérins hydrauliques (160, 176), et en ce que les extrémités supérieures des éléments de support peuvent être déplacés à peu près dans le même plan que le plan de cisaillement du dispositif de coupe (12).

14. Dispositif selon la revendication 13, caractérisé en ce que les extrémités supérieures des barres télescopiques (158, 168) comportent des éléments de palier à rotules (184) pour la réception avec coulissement des pièces métalliques.

15. Dispositif selon la revendication 13, caractérisé en ce qu'au moins une barre télescopique (168) est munie, pour la réception des éléments de liaison flexibles (210), d'un galet (212) autour duquel les éléments de liaison (210) sont guidés, dont l'extrémité inférieure est guidée sur un second galet (226) et est raccordée à une console (218) prévue sur la traverse (172), les éléments de liaison (210) étant, lors d'une modification d'écartement ou d'un déplacement en hauteur des barres télescopiques (158, 168), maintenus constamment, par l'intermédiaire du dispositif (216) pourvu d'un contrepoids, à la tension nécessaire.

16. Dispositif selon la revendication 12, caractérisé en ce que la barre télescopique (168) raccordée à la traverse (172) est déplaçable horizontalement par l'intermédiaire d'un vérin hydraulique (190) qui est relié par une extrémité au châssis de transport principal (18) et par son autre extrémité à la barre télescopique (168).

17. Dispositif selon une ou plusieurs des revendications précédentes, caractérisé en ce que le dispositif (216) portant le contrepoids est déplaçable au moyen du vérin hydraulique (176) pour la mise en tension permanente des éléments de liaison (210).

18. Dispositif selon une ou plusieurs des revendications précédentes, caractérisé en ce que le dispositif (216) est constitué par deux plaques de guidage opposées (224) qui reçoivent entre elles le galet (226) autour duquel les éléments de liaison câble de traction (210) sont guidés, l'une des extrémités des éléments de liaison (210) étant raccordée à la traverse (172) par l'intermédiaire de la console (218).

19. Dispositif selon une ou plusieurs des revendications précédentes, caractérisé en ce que la traverse (172), servant à la réception de la barre télescopique (168) déplaçable horizontalement et du vérin hydraulique conjugué (176), est fixée sur une douille (204) qui est déplaçable sur un rail formant glissière (198) au moyen du vérin hydraulique (190).

20. Dispositif selon une ou plusieurs des revendications précédentes, caractérisé en ce qu'il est prévu sur le châssis principal (18), au voisinage du dispositif de coupe (12) et à l'extrémité avant du dispositif transporteur (10), une tête magnétique (230) déplaçable en hauteur par l'intermédiaire d'un premier vérin hydraulique (240) et déplaçable horizontalement par l'intermédiaire d'un second vérin hydraulique (244), pour la réception et l'acheminement des pièces métalliques transversalement par rapport à la direction de déplacement des éléments transporteurs (16).

**Claims**

1. Device for conveying cut metal parts with a plurality of adjacently arranged conveyor elements (16) drivable by a shaft (38), each formed from a frame (30) with rotatably mounted rollers (36, 40) for receiving a conveyor band (44) each, wherein the frames (30) are connected by connecting elements (82, 84, 86) with a main conveyor frame (18) and between the respective adjacent conveyor elements (16) there are fitted, for each, two arms (122, 126) arranged with a space therebetween for reception of bearers (120) in parallelogram manner, which bearers for their part are each connected to a link mounting (144) and are swingable each by a hydraulic cylinder (140) to different height positions, characterised in that further bearer elements (22) adjustable in height are provided between the individual conveyor elements (16), which bearer elements serve for reception of metal parts, before they are cut off, wherein the bearer elements lying behind one another in the conveying direction of the material are connected at their upper ends by flexible connecting elements (210), and a device (216) for tensioning the connecting elements is provided to compensate for the variations in distance of the opposed bearer elements.

2. Device according to claim 1, characterised in that the conveyor band (44) guided over the rollers (36, 40) forms an upwardly facing conveyor surface which runs beneath the cutting device (12).

3. Device according to one or more of the preceding claims, characterised in that a conveyor device (24) is provided at the end of the conveyor elements (16), which device moves the cut off material from the conveyor elements (16) transverse to the conveying direction of the material.

4. Device according to one or more of the preceding claims, characterised in that the individual conveyor belts (44) are each associated with a tensioning device (50), which is formed from two tensioning rollers (52, 54) rotatably received in a pivotal support (56) adjustable against the action of a spring, wherein the lower run of the conveyor belt (44) is guided for one part above one tensioning roller (52) and for one part below a tensioning roller (54).

5. Device according to one or more of the preceding claims, characterised in that the individual shaft parts forming the shaft (38) are arranged with face sides spaced relative to one another and forming an intermediate space for exchange of the conveyor belt.

6. Device according to one or more of the preceding claims, characterised in that the shaft end is each drivingly coupled to the adjacent shaft end by a coupling element (98) slidable on the shaft (38).

7. Device according to one or more of the preceding claims, characterised in that the axes of the individual rollers or pulleys (36, 40) are each mounted end-sidedly cantilevered to take up the conveyor belts (44).

8. Device according to one or more of the preceding claims, characterised in that the surfaces of the rollers or pulleys (36, 40) for reception of the conveyor belt (44) are spherically formed and at least one pulley is provided on its face side with a collar.

9. Device according to one or more of the preceding claims, characterised in that the drive motor (100) for driving the shaft (38) is formed as a steplessly adjustable motor.

10. Device according to one or more of the preceding claims, characterised in that the main conveyor frame (18) comprises two bearers (76, 78) arranged with spacing to one another, extending transverse to the conveyor elements (16) and the individual conveyor elements (16) are releasably attached to the angle bearers (80, 82) provided on the bearer by angle mountings (84, 86) and screws.

11. Device according to one or more of the preceding claims, characterised in that the bearer elements (22) between the individual conveyor elements (16) are formed as insertable and retractable telescopic rods (158, 168) which direct the individual metal parts to the cutting device (12).

12. Device according to one or more of the preceding claims, characterised in that the individual support elements (22) are releasably connected to the main conveyor frame (18).

13. Device according to claim 11, characterised in that the support elements (22) are adjustable vertically by hydraulic cylinders (160, 170) and the upper ends of the support elements are adjustable into approximately the same plane as the shearing plane of the cutting device (12).

14. Device according to claim 13, characterised in that ball support parts (184) are provided at the upper ends of the telescopic rods (158, 168) for displaceable reception of the metal parts.

15. Device according to claim 13, characterised in that at least one telescopic rod (168) is equipped with a roller (212) for reception of the flexible connecting elements (210), about which the connecting elements (210) are guided, whose lower end is guided over a second roller (226) and attached to a support (218) provided on the cross bearer (172), wherein the connecting elements (210) are constantly maintained with the necessary tensioning force, on an alteration in spacing or a height adjustment of the telescopic rods (158, 168), by the device (216) provided with a weight.

16. Device according to claim 12, characterised in that the telescopic rod (168) connected to the cross bearer (172) is horizontally adjustable by a hydraulic cylinder (190), which is connected at one end to the main conveyor frame (18), at the other end to the telescopic rod (168).

17. Device according to one or more of the preceding claims, characterised in that the device (216) carrying the weight for constant tension of the connecting elements (210) is adjustable by means of the hydraulic cylinder (176).

18. Device according to one or more of the preceding claims, characterised in that the device (216) is formed from two oppositely-lying guide plates (224), which receive the roller (226) therebetween and about which the traction cable (210) is guided, wherein the one end of the connecting elements (210) is attached by the support (218) to the cross bearer (172).

19. Device according to one or more of the preceding claims, characterised in that the cross bearer (172) for reception of the horizontally adjustable telescopic rod (168) and the associated hydraulic cylinder (176) is fixed to a sleeve (204) which is displaceable by means of the hydraulic cylinder (190) on a slide bar (198).

20. Device according to one or more of the preceding claims, characterised in that, in the region of the cutting device (12) and at the front end of the conveyor device (10) there is arranged on the main conveyor frame (18) a magnetic head (230) adjustable in height by a first hydraulic cylinder (240) and adjustable horizontally by a second hydraulic cylinder (244), for reception and further movement of the metal parts transverse to the direction of movement of the conveyor elements (16).

FIG. 1

**FIG. 2**

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

*FIG. 16*

*FIG. 17*